# EUROPEAN PATENT SPECIFICATION

(11) **EP 3 718 840 B1**
(45) Date of publication and mention of the grant of the patent: **12.06.2024**
(21) Application number: 20167509.7
(22) Date of filing: 01.04.2020
(51) Int. Cl.: B60T 7/20, B60T 13/22

(54) **IMPROVED SAFETY VALVE FOR HYDRAULIC BRAKE CIRCUIT**
VERBESSERTES SICHERHEITSVENTIL FÜR EINE HYDRAULISCHE BREMSANLAGE
VALVE AMÉLIORÉE POUR UN DISPOSITIF DE FREINAGE HYDRAULIQUE

(30) Priority: 05.04.2019 IT 201900005228
(43) Date of publication of application: 07.10.2020
(73) Proprietor: CNH Industrial Italia S.p.A., 10156 Torino (IT)
(72) Inventor: Ciarrocchi, Marco Pietro, 64027 Sant omero (IT); Gentile, Francesco, 41123 Modena (IT); Digesu, Pasquale, 41124 Modena (IT)
(74) Representative: CNH Industrial IP Department

(56) References cited:
- WO-A1-2012/175927
- WO-A1-2019/030105
- GB-A- 2 543 037

## Description

### TECHNICAL FIELD

The present invention relates to a trailer brake hydraulic circuit for a vehicle-trailer combination, in particular it concerns a safety valve for a hydraulic trailer brake circuit.

### BACKGROUND OF THE INVENTION

Mother regulation requires the presence of a fail-safe dual line comprising a control line and of a supplementary line for controlling trailer brakes, as detailed in RVBR 2015/68, in a vehicle-trailer vehicle combination. Control line is used for controlling brakes in a standard operation of the trailer brake circuit and supplementary line is used for allowing a safe braking of the trailer in case of malfunctions of electrical or hydraulic components of the circuit.

In particular one of the possible way to implement a fails safe dual line, is the use of a safety valve for controlling the supplementary line.

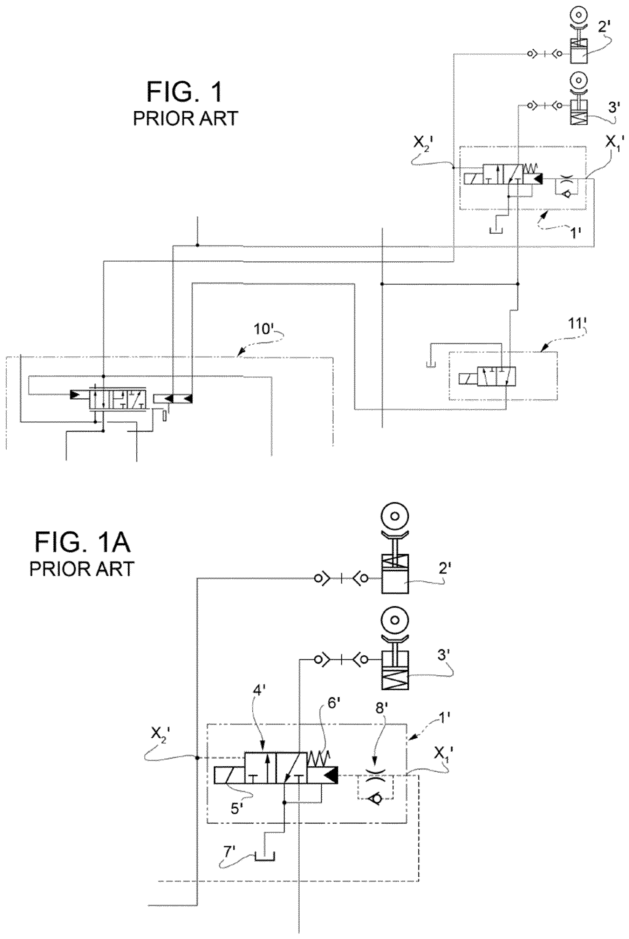

Making reference to figures 1 and 1A, such safety valve 1' is controlled by a balance of a first hydraulic signal X₁' and a second hydraulic signal X₂'. First hydraulic signal X₁' is the pilot signal of a trailer brake valve of the braking line and it has same pressure of the vehicle braking system, e.g. it could vary from 0 to 60-80 bar depending from the model and the tractor size; while X₂' is taken from the output of a trailer brake valve 10' (partially shown) and may vary from 0 to 140 bar, depending from the braking action on the vehicle and the pilot ratio on the trailer brake valve..

First signal X₂' is further connected to a control line brake 2' while a supplementary line brake 3' is fluidly connected to safety valve 1'. In particular, as requested by mother regulation, trailer is equipped with a positive braking device (i.e normally not braked and pressure to brake) controlled by the control line (0 bar to 140 bar), and a negative braking device (i.e. normally braked and pressure to release brake), controlled by the supplementary line (25-30 bar to 0 bar) . Accordingly, control line brake 2' is a positive brake, i.e. braking is grater proportionally to the value of the pressure of X₂' while supplementary line brake 3' is a negative brake, i.e. braking is greater inversely proportionally to the value of pressure applied into this latter.

Safety valve comprises a spool 4' having three ways and two positions which are controlled by a solenoid 5' placed from pilot signal X₂' side and balancing pilot signal X₁' and a preload force given by an elastic element 6' acting concurrently with pilot signal X₁'. The valve is normally open to tank, i.e. in rest condition, keeping supplementary line to 0 bar and trailer braked. When energized, it switches to working position, allowing pressure (15-35 bar) to supplementary line, releasing then trailer negative braking device.. Valve 1' further comprises, for sake of slowing signal X₁' which is faster than signal X₂', a dumping module 8'.

When vehicle park brake is on, solenoid 5' is off and spool 4' is in rest position, with supplementary line to tank, therefore the trailer is braked.

When the tractor park brake is off, the spool 4' is balanced among four forces, spring, pressure in X₁' and X₂' and solenoid force. The forces on X₁' and X₂' are present only in case of braking action on the tractor, this means that normally the solenoid only is able to win against spring and keep the spool 4' in working position, trailer therefore is unbraked.

When tractor brakes, with no faults in the control system, the pressure (force) in X_{2'} is always bigger than the pressure (force) in X₁'. This means that the position of the spool cannot change and supplementary line is stable at 0 bar, therefore supplementary brake is unbraked. Only control brake line is active, indeed normal braking condition is controlled by the control line.

When vehicle brakes but a fault is present into the control line system (electric or hydraulic), the balance on the safety is changing and the signal from X₂' reduces to ideally zero. This unbalance allows the spool 4' to move to tank line and supplementary line to 0 bar, braking automatically the trailer.

The above braking arrangement, to be fully in line with RVBR regulation, needs an another pair of valves. A first valve is a so-called "dump valve" (not shown) interposed between X₂' and discharge. Such valve comprises another solenoid. A second valve is a so-called advance valve 11', controlled by an electrical signal from the braking pedals, that allow an advanced pressure signal to the trailer brake to anticipate its spool movement and compensate the smaller trailer responsiveness compared to tractor braking system.

Therefore, the above described safety valve assembly is costly due to the presence of at least two valves (safety valve and dump valve), both provided of respective solenoids and is encumbering and complex. Moreover, there are many parts to assemble which can led to a failure.

Further, the above described safety valve assembly suffers of the following problem. In the braking condition it may happen that, pushing very slow or very fast the brake pedals, the signal in X₁' can be not synchronized with the signal in X₂', therefor allowing unwanted actions into the trailer, both braking or releasing brakes, depending on the vehicle dynamic.

Other examples of trailer brake circuit are disclosed in document GB2543037 A, WO2019030105 A1 or WO2012175927 A1.

In view of the above, the need is felt to simplify and improve existing trailer brake hydraulic circuit and, in particular, simplify and improve existing safety valve assemblies which can allow the control of trailer brakes in a fail-safe mode.

An aim of the present invention is to satisfy the above mentioned needs.

### SUMMARY OF THE INVENTION

The aforementioned aim is reached by a safety valve and a related trailer brake hydraulic circuit as claimed in the appended claim 1 of the invention.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic scheme of part of a trailer brake hydraulic circuit comprising a safety valve according as known in the art;
- Figure 1A is a scheme of a safety valve as known in the art;
- Figure 2 is a hydraulic scheme of a safety valve according to a first embodiment of the present invention;
- Figure 2A is a hydraulic scheme of a further embodiment of the valve of figure 2;

### DETAILED DESCRIPTION OF THE INVENTION

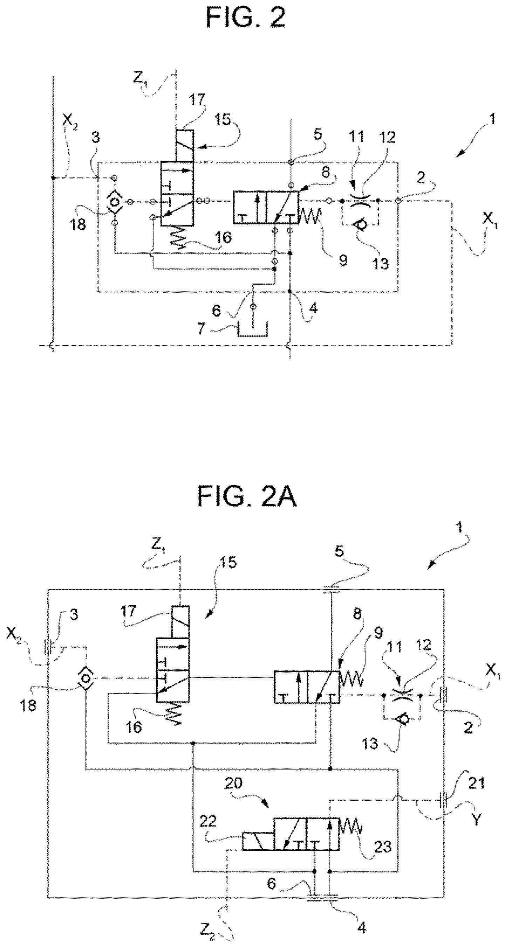

Figure 2 describes a first embodiment of a safety valve 1 for a trailer brake hydraulic circuit for a vehicle-trailer vehicle combination according to mother regulation RVBR 2015/68. Such compliant trailer brake hydraulic circuit, as known, is provided of a control line brake (not shown) for braking the trailer in a standard operation and a supplementary line brake (not shown) for braking the trailer in an emergency condition according to the invention.

Safety valve 1 comprises essentially a first opening 2 fluidly connected to receive a first pilot signal X₁ derived from vehicle braking hydraulic circuit and proportional to this latter, a second opening 3 fluidly connected to the control line of the braking hydraulic circuit to derive from this latter a second pilot signal X₂, a third opening 4 connected to a source of fluid in pressure of the vehicle, a fourth opening 5 fluidly connected to a supplementary line brake of the trailer brake hydraulic circuit and a fifth opening 6 fluidly connected to a discharge 7 of the hydraulic circuit.

The source of fluid in pressure has preferably a substantially constant value of pressure of about 15-35 bar and the supplementary line brake is feeding preferably a negative brake, i.e. its braking increases inversely proportionally with respect to the pressure of fluid which flow to this latter.

Valve 1 further comprises a main spool 8 fluidly interposed between third, fourth and fifth openings 4, 5, 6 and configured to assume a first position into which supplementary brake line is fluidly connected to discharge 7 and a second position into which pressure from opening 4 may flow towards supplementary brake. Accordingly, in first position of main spool 8 supplementary brake is applied, conversely in second portion of main spool 8 supplementary brake is released. Main spool 8 is therefore advantageously a three ways two positions spool.

When braking, main spool 8 is controlled hydraulically mainly by a balance between first and second pilot signals X₁, X₂. In particular, in the proposed embodiment, main spool 8 is maintained in the first position by an elastic element 9 configured to push main spool 8 into such safe position.

Main spool 8 is preferably fluidly connected to first signal X₁ via a dumping module 11 configured to slow X₁ with respect to X₂. Indeed X₂ is intrinsically slower with respect to X₁ since it is generated by trailer brake valve before (see e.g. exemplarily known brake hydraulic circuit of figure 1). Dumping module 11 is therefore needed to synchronize the two pilot signals. In particular, dumping module 11 comprises an orifice 12 fluidly interposed in parallel with a check valve 13 between main spool 8 and first opening 2.

Main spool 8 is advantageously fluidly connected to second signal X₂ via a selection spool 15 configured selectively allow the passage of second signal X₂ towards main spool 8. In particular, selection spool 15 is configured to assume a first (working) position into which signal X₂ may flow to main spool 8 and a second (resting) position into which connects main spool 8 to discharge 7. Advantageously selection spool 15 is a three ways two positions spool.

Accordingly, in the described embodiment, selection spool 15 is maintained into the second position by an elastic element 16 configured to push selection spool 15 into such position.

Selection spool 15 is actuated electrically, e.g. thanks to a solenoid 17 configured to receive an electric signal Z₁ derived from a park brake of the vehicle-trailer combination. Preferably, solenoid 17 advantageously selection spool 15 with a negative logic. Indeed, if park brake is disengaged, i.e. vehicle-trailer is working, selection spool 15 is activated via solenoid 17, conversely if park brake is engaged, i.e. vehicle-trailer is stopped and parked, solenoid 17 is de-energized and therefore selection spool 15 moves thanks to the force applied by elastic element 16 into its second position.

In the described embodiment selection spool 15 is fluidly connected to second signal X₂ via a shuttle valve 18 further fluidly connected to the source of fluid in pressure coming from third opening 4. As known, shuttle valve 18 allows the passage of the greatest signal coming into the conduit leading to main spool 8. This means to allow a pressure signal to pilot the spool 8 also when no braking action is present on the vehicle and X₂ has no pressure.

The operation of the above described embodiment is the following.

In a travelling condition of the vehicle-trailer system, park brake lever is not activated and therefore solenoid 17 is energized. Accordingly, selection valve 15 is placed into its first position against elastic element 16 so that second signal X₂ may flow to control main spool valve 8 to assume its second position into which supplementary brake is released. When braking, if a malfunctioning happens in trailer brake circuit so that signal X₂ decreases till becoming lower with respect to the sum of first signal X₁ and force applied by elastic element 9, than main spool 8 switches to its first position, i.e. safe position, into which supplementary brake is braked.

In a parking condition of the vehicle-trailer system, park brake lever is activated and therefore solenoid 17 is de-energized. Accordingly, selection valve 15 is placed into its second position, i.e. pushed by elastic element 16 so that control main spool valve 8 is fluidly connected to discharge 7 and force applied by elastic element 9, it switches to its first position, i.e. safe position, into which supplementary brake is braked.

Figure 2A describes an alternative embodiment of the safety valve 1 described in figure 2 in which this latter comprises, integrated into this latter, an advance valve 20.

In particular, safety valve 1 further defines a sixth opening 21 fluidly connected to a pilot port of trailer brake valve of the trailer brake hydraulic circuit. The advance valve 20 is fluidly connected to third, fifth and sixth openings 4, 6, 21 and it is configured to selectively allow the passage of fluid to generate a signal Y directed towards trailer brake hydraulic circuit.

In particular, advance valve 20 is configured to assume a first position into which fluid from pressure source from opening 4 may flow to sixth opening 21 and then generate signal Y which is imparted to trailer brake valve and a second position into which signal Y is fluidly connected to discharge 7. Accordingly advance valve 20 is a three ways-two positions valve.

Advance valve 20 is electrically actuated, e.g. by a solenoid 22 configured to overcome the load imparted by a spring 23 which is configured to maintain advance valve 20 into the first position. In particular, solenoid 22 is controlled by a signal Z2 imparted by electric switch of brake pedals.

The operation of the above described alternative embodiment is substantially the same of the embodiment of figure 2 except for the operation of the advance valve 20.

Indeed, as soon as the user touch brake pedal, advance valve 20 is switched into its second position and starts to pressurize trailer brake valve via signal Y.

## Claims

1. Trailer brake hydraulic circuit for a vehicle-trailer combination comprising a trailer brake valve, a control line and a supplementary line for controlling respective brakes of a trailer of said vehicle-trailer combination, said trailer brake hydraulic circuit comprising a safety valve (1), said safety valve (1) being fluidly interposed between said trailer brake valve and said supplementary line, said trailer brake hydraulic circuit being **characterized in that** said- safety valve (1) comprises a first opening (2) fluidly connected to receive a first pilot signal (X₁) derived from vehicle-trailer braking circuit, a second opening (3) fluidly connected to receive a second pilot signal (X₂) derived from said control line, a third opening (4) fluidly connected to a source of fluid in pressure of said circuit, a fourth opening (5) fluidly connected to a supplementary line brake of said trailer brake circuit and a fifth opening (6) fluidly connected to a discharge (7),
said safety valve (1) comprising:
- a main spool (8) fluidly connected to said third, fourth and fifth openings (4, 5, 6) and configured to assume a first position into which said fourth opening (5) is connected to discharge (7) and a second position into which said fourth opening (5) is connected to said source of fluid in pressure, said main spool (8) being actuated hydraulically in said positions by the equilibrium between said first and second pilot signals (X₁, X₂), and
- a selection spool (15) configured to selectively allow the passage of said second pilot signal (X₂) to said main spool (8) in function of the activation of a park brake of said vehicle-trailer combination,
said selection spool (15) is an electro-actuated valve, said electro-actuated valve being actuated by an electric signal (Z₁) generated in function of the status of said park brake.

2. Trailer brake hydraulic circuit according to claim 1, wherein said main spool (8) comprises an elastic element (9) configured to apply a force to said main spool (8) to displace this latter into said its first position.

3. Trailer brake hydraulic circuit according to claim 1, wherein said main spool (8) comprises an elastic element (9) configured to apply a force to said main spool (8) to displace this latter into said its second position.

4. Trailer brake hydraulic circuit according to any of the preceding claims, wherein said selection spool (15) is fluidly connected to said second and fifth openings (3, 6), to said discharge (7) and to said main spool (8) and it is configured to assume a first position into which allows the passage of fluid from said second opening (3) to said main spool (8) and a second position into which allows the passage of fluid from said second opening (3) to discharge (7).

5. Trailer brake hydraulic circuit according to any of the preceding claims , wherein said selection spool (15) is a negative-logic electro actuated valve.

6. Trailer brake hydraulic circuit according to claims 4 or 5, wherein said selection spool (15) comprises a elastic element (16) configured to apply a force to said selection spool (15) to displace this latter into said its first position.

7. Trailer brake hydraulic circuit according to any of claims 4 or 5, wherein said selection spool (15) comprises a elastic element (16) configured to apply a force to said selection spool (15) to displace this latter into said its second position.

8. Trailer brake hydraulic circuit according to any of claims 4 or 5, wherein said safety valve (1) defines a sixth opening (21) fluidly connected to said trailer brake valve and comprises an advance valve (20) integrated into said safety valve (1) and fluidly interposed between said third, fifth and sixth openings (4, 6, 21), said advance valve (20) being configured to assume a first position into which said sixth opening (21) is fluidly connected to discharge (7) and a second position into which said third opening (4) is fluidly connected to said sixth opening (21) thereby generating a signal (Y) fluidly directed towards said trailer brake valve, said advance valve (20) assuming one between the aforementioned position in function of an operative status of a brake of said vehicle-trailer combination.

9. Trailer brake hydraulic circuit according to claim 8, wherein said advance valve (20) is an electro-actuated valve, said electro-actuated valve being actuated by an electric signal (Z2) generated in function of the status of said brake.

10. Trailer brake hydraulic circuit according to any of the preceding claims, further comprising a dumping module (11) fluidly interposed between said first opening (2) and said main spool (8) and configured to slow said first signal (X₁) with respect to said second signal (X₂).

11. Trailer brake hydraulic circuit according to claim 10, wherein said dumping module (11) comprises an orifice (12) fluidly in parallel to a check valve (13).

12. Trailer brake hydraulic circuit according to any of the preceding claims, further comprising a shuttle valve (18) fluidly interposed between said second opening (3), said selection spool (15) and said third opening (4), said shuttle valve (18) being configured to allow the passage of the higher pressure flow coming from one between second and third openings (3, 4) to said selection spool (15).

## Patentansprüche

1. Hydraulischer Anhängerbremskreis für ein Fahrzeug-Anhänger-Gespann umfassend ein Anhänger-Bremsventil, eine Steuerleitung und eine zusätzliche Leitung zum Steuern der entsprechenden Bremsen eines Anhängers des Fahrzeug-Anhänger-Gespanns,
wobei der hydraulische Anhängerbremskreis ein Sicherheitsventil (1) umfasst, wobei das Sicherheitsventil (1) fluidtechnisch zwischen dem Anhänger-Bremsventil und der zusätzlichen Leitung angeordnet ist,
wobei der hydraulische Anhängerbremskreis **dadurch gekennzeichnet ist, dass** das Sicherheitsventil (1) eine erste Öffnung (2), die fluidtechnisch angeschlossen ist, um ein erstes Pilotsignal (X₁) zu empfangen, das von dem Fahrzeug-Anhängerbremskreis empfangen wird, eine zweite Öffnung (3), die fluidtechnisch angeschlossen ist, um ein zweites Pilotsignal (X₂) zu empfangen, das von der Steuerleitung empfangen wird, eine dritte Öffnung (4), die fluidtechnisch mit einer Quelle von mit Druck beaufschlagten Fluid des Kreises verbunden ist, eine vierte Öffnung (5), die fluidtechnisch mit einer zusätzlichen Bremsleitung des Fahrzeug-Anhänger Bremskreises verbunden ist, und eine fünfte Öffnung (6) aufweist, die fluidtechnisch mit einem Ablass (7) verbunden ist,
wobei das Sicherheitsventil (1) umfasst:
- einen Hauptkolben (8), der fluidtechnisch mit der dritten, vierten und fünften Öffnung (4, 5, 6) verbunden ist und dazu eingerichtet ist, eine erste Position, in der die vierte Öffnung (5) mit dem Ablass (7) verbunden ist, und eine zweite Position einzunehmen, in der die vierte Öffnung (5) mit der Quelle von mit Druck beaufschlagten Fluid verbunden ist, wobei der Hauptkolben (8) durch das Gleichgewicht zwischen dem ersten und dem zweiten Pilotsignal (X₁, X₂) hydraulisch in die Positionen betätigt wird, und
- einen Auswahlkolben (15), der dazu eingerichtet ist, in Abhängigkeit von der Betätigung einer Parkbremse des Fahrzeug-Anhänger-Gespanns wahlweise den Durchlass des zweiten Pilotsignals (X₂) zu dem Hauptkolben (8) zu ermöglichen,
wobei der Auswahlkolben (15) ein elektrisch betätigtes Ventil ist, wobei das elektrisch betätigte Ventil durch ein elektrisches Signal (Z₁) betätigt wird, das in Abhängigkeit von dem Status der Parkbremse erzeugt wird.

2. Hydraulischer Anhängerbremskreis nach Anspruch 1, wobei der Hauptkolben (8) ein elastisches Element (9) umfasst, das dazu eingerichtet ist, eine Kraft auf den Hauptkolben (8) aufzubringen, um ihn in die erste Position zu verschieben.

3. Hydraulischer Anhängerbremskreis nach Anspruch 1, wobei der Hauptkolben (8) ein elastisches Element (9) umfasst, das dazu eingerichtet ist, eine Kraft auf den Hauptkolben (8) aufzubringen, um ihn in die zweite Position zu verschieben.

4. Hydraulischer Anhängerbremskreis nach einem der vorhergehenden Ansprüche, wobei der Auswahlkolben (15) über die zweite und fünfte Öffnung (3, 6) mit dem Ablass (7) und dem Hauptkolben (8) fluidtechnisch verbunden ist und dazu eingerichtet ist, eine erste Position, die den Durchlass von Fluid von der zweiten Öffnung (3) zu dem Hauptkolben (8) ermöglicht, und eine zweite Position einzunehmen, die den Durchlass von Fluid von der zweiten Öffnung (3) zu dem Ablass (7) ermöglicht.

5. Hydraulischer Anhängerbremskreis nach einem der vorhergehenden Ansprüche, wobei der Auswahlkolben (15) ein elektrisch betätigtes Ventil negativer Logik ist.

6. Hydraulischer Anhängerbremskreis nach Anspruch 4 oder 5, wobei der Auswahlkolben (15) ein elastisches Element (16) umfasst, das dazu eingerichtet ist, eine Kraft auf den Auswahlkolben (15) aufzubringen, um ihn in seine erste Position zu verschieben.

7. Hydraulischer Anhängerbremskreis nach einem der Ansprüche 4 oder 5, wobei der Auswahlkolben (15) ein elastisches Element (16) umfasst, das dazu eingerichtet ist, eine Kraft auf den Auswahlkolben (15) aufzubringen, um ihn in seine zweite Position zu verschieben.

8. Hydraulischer Anhängerbremskreis nach einem der Ansprüche 4 oder 5, wobei das Sicherheitsventil (1) eine sechste Öffnung (21) definiert, die mit dem Anhänger-Bremsventil fluidtechnisch verbunden ist und ein Vorlaufventil (20) umfasst, das in das Sicherheitsventil (1) integriert ist und fluidtechnisch zwischen der dritten, fünften und sechsten Öffnung (4, 6, 21) angeordnet ist, wobei das Vorlaufventil (20) dazu eingerichtet ist, eine erste Position, in der die sechste Öffnung (21) mit dem Ablass (7) fluidtechnisch verbunden ist, und eine zweite Position einzunehmen, in der die dritte Öffnung (4) mit der sechsten Öffnung (21) fluidtechnisch verbunden ist, um dadurch ein Signal (Y) zu erzeugen, das fluidtechnisch in Richtung des Anhänger-Bremsventils gerichtet ist, wobei das Vorlaufventil (20) eine der zuvor genannten Positionen in Abhängigkeit von einem Bedienstatus einer Bremse des Fahrzeug-Anhänger-Gespanns annimmt.

9. Hydraulischer Anhängerbremskreis nach Anspruch 8, wobei das Vorlaufventil (20) ein elektrisch betätigtes Ventil ist, wobei das elektrisch betätigte Ventil von einem elektrischen Signal (Z2) betätigt wird, das in Abhängigkeit von dem Status der Bremse erzeugt wird.

10. Hydraulischer Anhängerbremskreis nach einem der vorhergehenden Ansprüche, weiterhin umfassend ein Auslassmodul (11), das fluidtechnisch zwischen der ersten Öffnung (2) und dem Hauptkolben (8) angeordnet ist und dazu eingerichtet ist, das erste Signal (X₁) gegenüber dem zweiten Signal (X₂) zu verzögern.

11. Hydraulischer Anhängerbremskreis nach Anspruch 10, wobei das Auslassmodul (11) eine Drossel (12) aufweist, die fluidtechnisch parallel zu einem Kontrollventil (13) ist.

12. Hydraulischer Anhängerbremskreis nach einem der vorhergehenden Ansprüche, weiterhin umfassend ein Wechselventil (18), das fluidtechnisch zwischen der zweiten Öffnung (3), dem Auswahlkolben (15) und der dritten Öffnung (4) angeordnet ist, wobei das Wechselventil (18) dazu eingerichtet ist, den Durchlass von einem Strom mit höherem Druck, der von einer aus der zweiten und dritten Öffnung (3, 4) kommt, zu dem Auswahlkolben (15) zu ermöglichen.

## Revendications

1. Circuit hydraulique de freinage de remorque pour un ensemble véhicule-remorque comprenant une soupape de freinage de remorque, une conduite de commande et une conduite supplémentaire pour commander les freins respectifs d'une remorque dudit ensemble véhicule-remorque, ledit circuit hydraulique de freinage de remorque comprenant une soupape de sécurité (1), ladite soupape de sécurité (1) étant fluidiquement interposée entre ladite soupape de freinage de remorque et ladite conduite supplémentaire, ledit circuit hydraulique de freinage de remorque étant **caractérisé en ce que** ladite soupape de sécurité (1) comprend une première ouverture (2) reliée fluidiquement pour recevoir un premier signal pilote (X₁) dérivé du circuit de freinage du véhicule-remorque, une deuxième ouverture (3) reliée fluidiquement pour recevoir un second signal pilote (X₂) dérivé de ladite conduite de commande, une troisième ouverture (4) reliée fluidiquement à une source de fluide sous pression dudit circuit, une quatrième ouverture (5) reliée fluidiquement à une conduite supplémentaire de freinage dudit circuit de freinage de remorque et une cinquième ouverture (6) reliée fluidiquement à une décharge (7),
ladite soupape de sécurité (1) comprenant :
- une bobine principale (8) fluidiquement reliée aux troisième, quatrième et cinquième ouvertures (4, 5, 6) et configurée pour prendre une première position dans laquelle ladite quatrième ouverture (5) est reliée à la décharge (7) et une seconde position dans laquelle ladite quatrième ouverture (5) est reliée à ladite source de fluide sous pression, ladite bobine principale (8) étant actionnée hydrauliquement dans lesdites positions par l'équilibre entre lesdits premier et second signaux pilotes (X1, X2), et
- une bobine de sélection (15) configurée pour permettre sélectivement le passage dudit second signal pilote (X2) vers ladite bobine principale (8) en fonction de l'activation d'un frein de stationnement dudit ensemble véhicule-remorque,
ladite bobine de sélection (15) est une soupape électro-actionnée, ladite soupape électro-actionnée étant actionnée par un signal électrique (Z₁) généré en fonction de l'état dudit frein de stationnement.

2. Circuit hydraulique de freinage de remorque selon la revendication 1, dans lequel ladite bobine principale (8) comprend un élément élastique (9) configuré pour appliquer une force à ladite bobine principale (8) afin de déplacer cette dernière dans ladite première position.

3. Circuit hydraulique de freinage de remorque selon la revendication 1, dans lequel ladite bobine principale (8) comprend un élément élastique (9) configuré pour appliquer une force à ladite bobine principale (8) afin de déplacer cette dernière dans ladite seconde position.

4. Circuit hydraulique de freinage de remorque selon l'une quelconque des revendications précédentes, dans lequel ladite bobine de sélection (15) est reliée fluidiquement auxdites deuxième et cinquième ouvertures (3, 6) à ladite décharge (7) et à la bobine principale (8) et est configurée pour prendre une première position dans laquelle elle permet le passage du fluide de ladite deuxième ouverture (3) à ladite bobine principale (8) et une seconde position dans laquelle elle permet le passage du fluide de ladite deuxième ouverture (3) à la décharge (7).

5. Circuit hydraulique de freinage de remorque selon l'une quelconque des revendications précédentes, dans lequel ladite bobine de sélection (15) est une soupape électro-actionnée à logique négative.

6. Circuit hydraulique de freinage de remorque selon la revendication 4 ou 5, dans lequel ladite bobine de sélection (15) comprend un élément élastique (16) configuré pour appliquer une force à ladite bobine de sélection (15) afin de déplacer cette dernière dans ladite première position.

7. Circuit hydraulique de freinage de remorque selon l'une quelconque des revendications 4 ou 5, dans lequel ladite bobine de sélection (15) comprend un élément élastique (16) configuré pour appliquer une force à ladite bobine de sélection (15) afin de déplacer cette dernière dans ladite seconde position.

8. Circuit hydraulique de freinage de remorque selon l'une quelconque des revendications 4 ou 5, dans lequel ladite soupape de sécurité (1) définit une sixième ouverture (21) fluidiquement reliée à ladite soupape de freinage de remorque et comprend une soupape d'avance (20) intégrée à ladite soupape de sécurité (1) et interposée fluidiquement entre lesdites troisième, cinquième et sixième ouvertures (4, 6, 21), ladite soupape d'avance (20) étant configurée pour prendre une première position dans laquelle ladite sixième ouverture (21) est fluidiquement reliée à la décharge (7) et une seconde position dans laquelle ladite troisième ouverture (4) est fluidiquement reliée à ladite sixième ouverture (21), générant ainsi un signal (Y) fluidiquement dirigé vers ladite soupape de freinage de remorque, ladite soupape d'avance (20) prenant l'une ou l'autre des positions susmentionnées en fonction de l'état de fonctionnement d'un frein dudit ensemble véhicule-remorque.

9. Circuit hydraulique de freinage de remorque selon la revendication 8, dans lequel ladite soupape d'avance (20) est une soupape électro-actionnée, ladite soupape électro-actionnée étant actionnée par un signal électrique (Z2) généré en fonction de l'état dudit frein.

10. Circuit hydraulique de freinage de remorque selon l'une quelconque des revendications précédentes, comprenant en outre un module de déchargement (11) fluidiquement interposé entre ladite première ouverture (2) et ladite bobine principale (8) et configuré pour ralentir ledit premier signal (X1) par rapport audit second signal (X2).

11. Circuit hydraulique de freinage de remorque selon la revendication 10, dans lequel ledit module de déchargement (11) comprend un orifice (12) fluidiquement en parallèle avec un clapet anti-retour (13).

12. Circuit hydraulique de freinage de remorque selon l'une quelconque des revendications précédentes, comprenant en outre une vanne d'arrêt (18) fluidiquement interposée entre ladite deuxième ouverture (3), ladite bobine de sélection (15) et ladite troisième ouverture (4), ladite vanne d'arrêt (18) étant configurée pour permettre le passage du flux à plus haute pression provenant de l'une entre la deuxième et la troisième ouverture (3, 4) vers ladite bobine de sélection (15).
